# FASCICULE DE BREVET EUROPEEN

(11) **EP 0 389 360 B1**
(45) Date de publication et mention de la délivrance du brevet: **26.05.1993**
(21) Numéro de dépôt: 90400763.0
(22) Date de dépôt: 20.03.1990
(51) Int. Cl.: B65H 49/12

(54) **Bobine de fibre optique de grande longueur utilisable sur un missile filoguidé**
Spule mit einer sehr langen optischen Glasfaser für eine mit einem Draht gesteuerte Rakete
Bobbin with a long optical glass fibre for a wire controlled missile

(30) Priorité: 22.03.1989 FR 8903752
(43) Date de publication de la demande: 26.09.1990
(73) Titulaire: AEROSPATIALE Société Nationale Industrielle, 75781 Paris Cédex 16 (FR)
(72) Inventeur: Marée, Michel, F-91190 Gif Sur Yvette (FR); Moreau, Patrick, F-92160 Antony (FR)
(74) Mandataire: Mongrédien, André

(56) Documents cités:
- DE-C- 128 735
- DE-C- 285 901
- FR-A- 752 880
- US-A- 4 326 657

## Description

L'invention relève du domaine des missiles filoguidés, en particulier au moyen de fibres optiques.

Les missiles filoguidés, c'est-à-dire guidés par l'intermédiaire d'un fil de télécommande déroulé au moment du tir entre le missile et le poste de tir sont d'un emploi courant. Ce fil est donc un organe souple de transmission d'informations au missile. Ces informations sont en particulier des ordres, afin d'en modifier la trajectoire au cours du vol. Cette technique de filoguidage est utilisée pour les missiles à courte ou moyenne portée, c'est-à-dire jusqu'à dix kilomètres, notamment en raison de son faible coût et de sa relative insensibilité au brouillage. Le fil peut être constitué de plusieurs conducteurs métalliques équipés de filaments porteurs en matières organiques, telles que le polyester, la polyaramide, etc. La bande passante d'une telle liaison est limitée à quelques centaines de Hertz, ce qui limite la longueur de fil embarquée à environ 10-12 Km (US-A-4326657).

La réalisation de telles bobines de fil de télécommande, qui sont montées dans la partie arrière des missiles, obéit à des règles empiriques, auxquelles il est impératif de se plier. En particulier, le rapport L/D de la longueur sur le diamètre de la bobine ne doit pas dépasser un nombre déterminé égal à environ 2. De même, le nombre de couches de spires jointives superposées ne doit pas dépasser la quarantaine. Ces conditions étant remplies, on constate que la portée du missile est fonction du diamètre extérieur de la bobine. Compte tenu de la relativement courte portée des missiles filoguidés, aucun problème particulier ne se posait jusqu'alors, vis-à-vis de la conception des missiles, et en particulier, vis-à-vis de la conception de leur bobine de fil.

L'utilisation de la fibre optique, en remplacement du fil de télécommande à base de conducteurs métalliques, apporte un progrès remarquable. En effet, la bande passante de la fibre optique est un million de fois supérieure à celle du conducteur métallique, et permet donc la transmission d'informations d'une toute autre nature, spécialement en ce qui concerne le débit. Ainsi, des images vidéo, prises par une caméra embarquée, peuvent être transmises du missile au poste de tir. De plus, la fibre optique apparaît comme quasiment insensible au brouillage. Ces qualités offrent la possibilité d'envisager des transmissions dont les longueurs avoisinent les cent kilomètres, ces transmissions s'effectuant dans les deux sens, poste de tir-missile et missile-poste de tir.

Or, les bobines de fibre optique obéissent aux mêmes règles de conception et de bobinage que les bobines à fil de télécommande métallique. Dans ces conditions, et pour les grandes longueurs, le diamètre de la bobine peut revêtir un caractère dimensionnant trop gênant pour le missile, puisqu'il peut entraîner plusieurs inconvénients. En effet, un diamètre trop important implique une augmentation de la traînée des missiles, donc l'utilisation de propulseurs plus performants, plus lourds, plus chers... Par là-même, la discrétion du missile est diminuée par l'augmentation de ses dimensions, ce qui par ailleurs, accroît l'encombrement du porteur.

L'invention a pour but de remédier à ces inconvénients, en équipant les missiles de bobines de dimensions normales mais dont la fibre optique est de grande longueur.

A cet effet, un objet de l'invention est une bobine de fibre optique de grande longueur constituée d'un support cylindrique principal autour duquel est enroulée couche par couche une première partie de la fibre optique, d'une couche interne enroulée directement sur le support cylindrique principal jusqu'à une couche externe, la fibre optique étant destinée à être déroulée par traction, à partir de la couche externe, jusqu'à la couche interne.

Selon l'invention, la bobine comprend un premier support cylindrique supplémentaire, concentrique et placé à l'intérieur du support cylindrique principal, une deuxième partie de la fibre optique étant enroulée autour de ce premier support supplémentaire, la couche interne de la première partie de la fibre optique étant directement reliée à une couche externe de la deuxième partie de la fibre optique.

L'invention utilise donc la superposition de plusieurs étages de bobinage, chaque étage respectant les conditions de fonctionnement énoncées précédemment.

Pour améliorer le maintien du bobinage, le support principal et le support supplémentaire comportent chacun un bourrelet sur une première extrémité dite de déroulement.

Il est avantageux d'envisager plusieurs supports cylindriques supplémentaires, concentriques, placés à l'intérieur les uns des autres, le premier support supplémentaire étant placé à l'intérieur du support principal, et sur lesquels sont enroulées respectivement, un même nombre déterminé M, de parties successives de la fibre optique, la couche interne de la partie de rang M étant reliée directement à la couche externe de la partie de rang M + 1, chaque support supplémentaire comportant un bourrelet sur une première extrémité dite de déroulement de chaque support supplémentaire.

Dans une réalisation préférentielle de la bobine selon l'invention, le bourrelet est échancré localement pour permettre le passage direct de la fibre optique de la couche interne de la partie de fibre de rang M vers la couche externe de la partie de fibre de rang M + 1 de la fibre optique, la dernière spire de la couche externe de la partie de fibre de rang M + 1 se trouvant près de l'extrémité de déroulement du support de rang M. Cette disposition facilite la transition d'un étage de bobinage à l'autre, lors du déroulement de la fibre optique.

Selon un aspect de l'invention, la première spire de la couche externe de rang M + 1 se trouve en correspondance avec l'extrémité de déroulement du support de rang M et comportant le bourrelet. Ceci facilite également le déroulement de la fibre optique, lors des transitions d'un étage à l'autre.

Dans la réalisation de l'invention, la bobine comporte un capot concentrique avec les supports, de diamètre déterminé pour entourer la première partie de la fibre optique placée sur le support principal, tout en laissant un espace permettant le phénomène de ballonnement de la fibre optique lors de son déroulement.

Ce capot peut se prolonger au-delà des extrémités de déroulement pour se terminer par une partie d'extrémité de diamètre inférieure au diamètre initial du capot.

Selon une réalisation possible de la bobine selon l'invention, chaque support de rang M se prolonge au-delà de la première spire de la couche externe de la partie de fibre optique de rang M + 1, pour constituer un capot pour ladite partie supplémentaire de rang M + 1, le diamètre du capot ainsi constitué diminuant progressivement.

Un autre objet principal de l'invention est un missile comportant une bobine, tel que décrit précédemment, montée à l'arrière du missile, et permettant une liaison bidirectionnelle avec l'installation au sol, en pouvant être dévidée au cours du parcours du missile par les extrémités de déroulement des supports de la fibre optique.

L'invention et ses différentes caractéristiques techniques seront mieux comprises à la lecture de la description qui suit, et qui est annexée des figures représentant respectivement :
- figure 1, deux demi-coupes longitudinales de bobines de fil différentes, permettant d'expliquer la conception de la bobine selon l'invention ;
- figure 2, une coupe de la première réalisation de la bobine selon l'invention ;
- figure 3, une vue d'un support de la bobine selon l'invention ;
- figure 4, une vue partielle explicative du passage de la fibre entre deux étages de bobinage dans la bobine selon l'invention ; et
- figure 5, une deuxième variante de réalisation de la bobine selon l'invention.

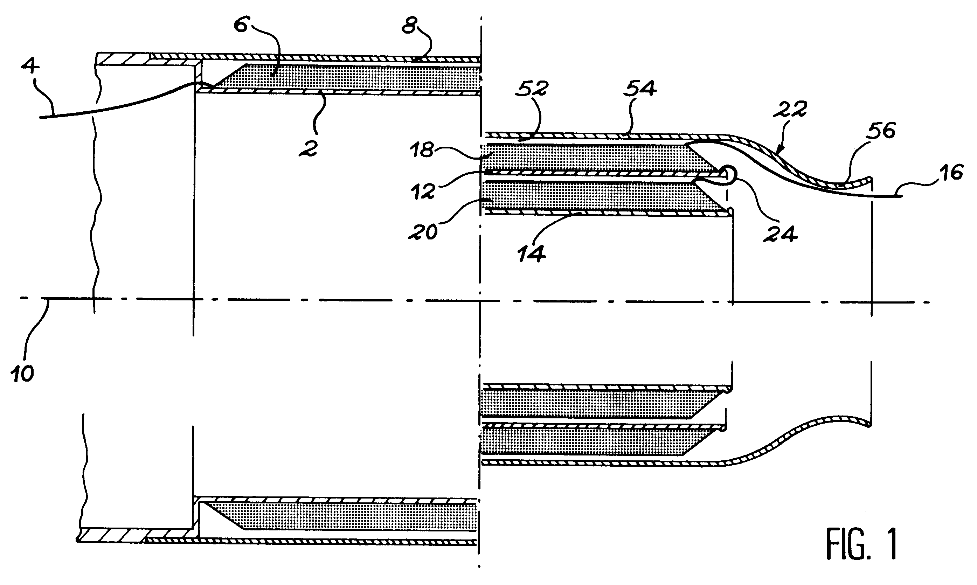

La partie gauche de la figure 1 est une demi-coupe d'une bobine de fibre optique d'axe longitudinal 10, installée à l'intérieur d'un missile, telle qu'elle serait construite pour assurer une longue portée au missile. La conception d'une telle bobine est celle des bobines selon l'art antérieur. C'est-à-dire qu'elle possède un seul support 2 autour duquel est enroulée une fibre optique 4, sur une épaisseur représentant environ une quarantaine de couches 6 de fibre optique. Le diamètre d'une telle bobine est fonction de la distance à faire parcourir au missile. En conséquence, ce diamètre est relativement important. Comme énoncé précédemment, l'encombrement du missile s'en trouve augmenté, entraînant les inconvénients précités. Le tout est entouré d'un capot 8 prolongeant le corps du missile.

La partie droite de la figure 1 est une coupe partielle de la bobine selon l'invention, dans sa réalisation la plus simple. Cette bobine est positionnée autour de l'axe 10, de manière concentrique à la partie de bobine représentée à gauche. Elle comporte un support principal cylindrique 12, dont le diamètre est du même ordre de grandeur que le diamètre des supports des bobines selon l'art antérieur, lorsque celles-ci ont une courte portée. Autour de ce support cylindrique principal 12 est enroulée une première partie 18 de la fibre optique 16, sur une épaisseur analogue à celle représentée sur la partie gauche de la figure. C'est-à-dire que cette épaisseur correspond aux épaisseurs habituellement constituées sur les bobines équipant les missiles à courte et moyenne portées.

Afin d'obtenir une plus grande portée du missile, il est nécessaire de bénéficier d'une plus grande longueur de fibre optique. A cet effet, la caractéristique principale de l'invention est de disposer plusieurs étages de fibres optiques bobinées. La constitution de chaque étage est telle qu'ils obéissent aux règles de conception des bobinages tels qu'énoncés dans le préambule de la description. Plus précisément, le rapport de la longueur sur le diamètre de chaque bobine est de l'ordre de deux, et le nombre de couches de fibres optiques sur un même bobinage ne dépasse pas quarante. A cet effet, un premier support supplémentaire 14 est disposé à l'intérieur du support principal 12, de manière concentrique à celui-ci. Il supporte une deuxième partie 20 de la fibre optique 16 qui est entourée autour de ce premier support supplémentaire 14 de manière analogue à la première partie 18 de la fibre 16. Le tout est entouré de la partie principale cylindrique 54 d'un capot 22. Ce dernier possède une extrémité 56 dépassant les supports 12 et 14, et de diamètre inférieur au diamètre de la partie principale cylindrique 54. Cette forme rétrécie est prévue pour guider la fibre optique 16 lors de son déroulement.

On conçoit aisément, compte tenu de la présence de deux bobinages concentriques que la surface totale des sections bobinées autour du support principal 12 et du support supplémentaire 14 puisse être plus importante que la surface d'une seule section bobinée d'une bobine selon l'art antérieur. Ce total de surfaces de sections bobinées correspondant à la distance à faire parcourir au missile, a son équivalent dans une bobine selon l'art antérieur de diamètre plus important, comme représenté sur la partie gauche de la figure.

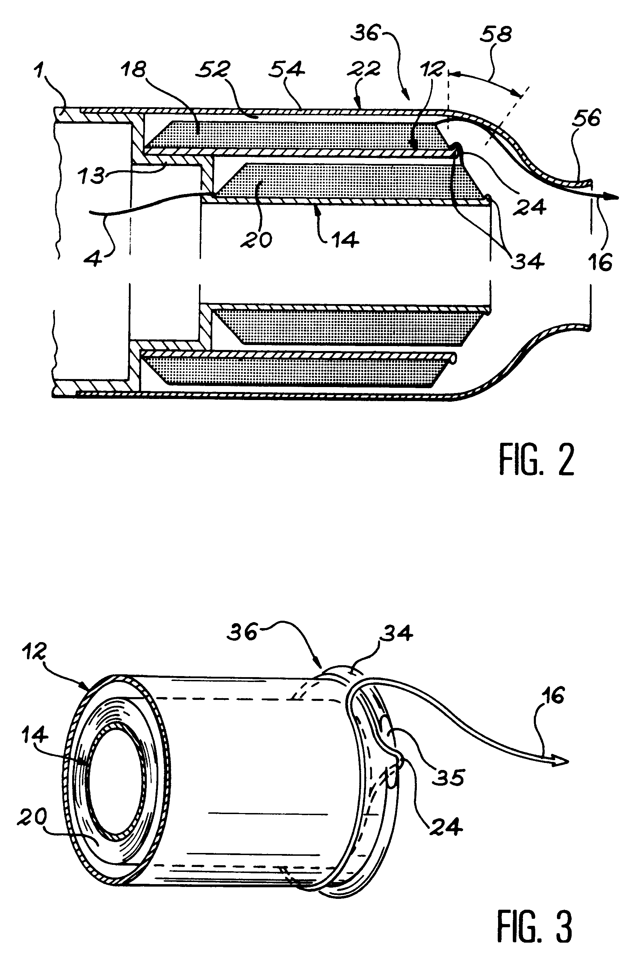

On retrouve sur la figure 2 la conception d'une bobine selon l'invention. Elle est montée sur le corps 1 d'un missile. Celui-ci possède une partie adaptée 13 sur laquelle peuvent être rapportés les supports principal 12 et supplémentaire 14 de la bobine.

La fibre optique 16 est donc enroulée dans sa première partie 18 sur le support principal 12. Ce bobinage est constitué de manière classique, en respectant les règles de conception des bobinages classiques. La fibre optique 16 est enroulée couche par couche, à partir d'une couche interne en contact avec le support principal 12 jusqu'à une dernière couche qui sera la première couche déroulée.

Le support cylindrique supplémentaire 14 est positionné de manière fixe par rapport au corps 1 du missile, par l'intermédiaire de la pièce rapportée 13. Sur ce support supplémentaire 14 est enroulée une deuxième partie 20 de la fibre optique 16. La couche externe de cette deuxième partie 20 est constituée du prolongement de la couche interne de la première partie 18 de la fibre que constitue le fragment 24 de la fibre optique. De ce fait, le déroulement de la fibre optique 16 se fait sans interruption, de la première partie 18 à la deuxième partie 20 de la fibre optique 16.

Le support principal 12 peut comporter à une première extrémité 36 par laquelle la fibre optique 16 est déroulée par traction, un bourrelet 34 faisant office de cale pour l'empilement des différentes couches de fibre optique de la première partie 18. De cette manière, cette première partie 18 est maintenue en place. Le support supplémentaire 14 peut être équipé du même bourrelet 34, remplissant la même fonction vis à-vis de la deuxième partie 20 de la fibre optique. La dernière spire de la fibre optique 16 est reliée à l'intérieur du missile auquel elle est fixée et reliée aux différents équipements concernés par la transmission donnée.

Le tout est entouré d'un capot 22 fixé sur le corps 1 du missile. Ce capot 22 est constitué d'une partie principale cylindrique 54, dont le diamètre correspond au diamètre extérieur du corps du missile. Elle entoure de manière concentrique les deux parties bobinées de la fibre optique, tout en laissant un espace 52 entre la première partie 18 et sa surface interne. Cet espace 52 est destiné à permettre le phénomène de ballonnement, repéré 58, de la fibre optique 16, lors du déroulement de cette dernière. Le capot 22 se termine d'une façon préférentielle par une partie d'extrémité 56 de diamètre inférieur au diamètre de la partie principale 54 du capot 22. Cette disposition a pour but de limiter le débattement de la fibre optique 16, une fois sortie à l'extérieur du capot 22.

La figure 3 permet de voir un détail de réalisation du bourrelet 34 des supports 12 et 14. Pour permettre le déroulement continu de la fibre optique 16, en particulier lors du passage d'une partie bobinée à l'autre, le bourrelet 34 est interrompu. Cette interruption permet à la partie 24 de fibre optique issue de la dernière couche, enroulée sur le support 12 de passer vers le bobinage supplémentaire sans passer par le bourrelet. En effet, ceci pourrait provoquer un changement brutal de tension dans la fibre optique lors du déroulement. Cette interruption peut être réalisée sous la forme d'un méplat 35 ou d'une simple échancrure. Quelle que soit la réalisation de cette caractéristique technique, la fibre optique ne doit pas subir au niveau du bourrelet 34 une augmentation locale de diamètre. La partie de transition 24 de la fibre optique est ainsi réduite au minimum, de manière à éviter le phénomène de coup de fouet qui se produit lorsque le déroulement atteint une longueur de fibre non collée. En effet, dans ce cas, la fibre se libère plus aisément qu'une longueur de fibre donnée.

Une autre méthode peut être prévue pour supprimer le phénomène de coup de fouet. Elle consiste à augmenter localement la raideur de la fibre. Ceci peut être obtenu, soit par induction d'un produit du type vernis, soit par adjonction locale d'une légère gaine.

Dans les parties enroulées 18, 20, de la fibre optique, les spires sont de préférence faiblement collées les unes aux autres.

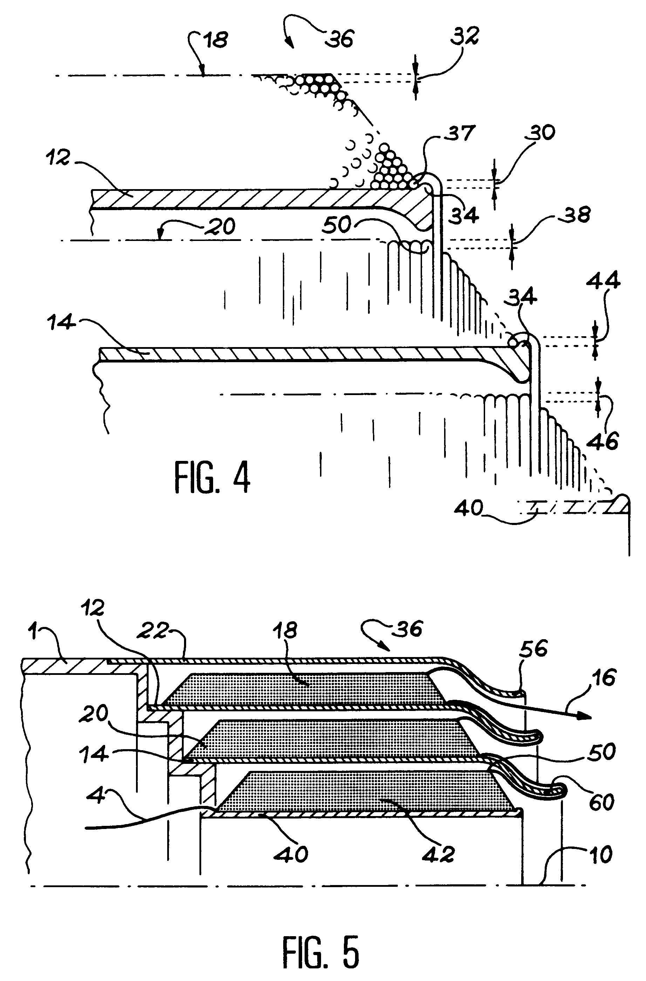

En référence aux figure 4 et 5, l'invention prévoit d'utiliser plusieurs supports supplémentaires 14 et 40. Cette disposition est utile pour prévoir une très grande longueur de fibre optique, dans le cas des missiles à très longue portée.

La figure 4 montre le premier bobinage 18 placé sur le support principal 12, constitué de différentes couches de fibre optique placées entre la couche interne 30 enroulée autour du support 12 et la couche externe 32. La couche interne 30 placée sur le support cylindrique principal 12 est reliée à la couche externe 38 de la partie 20 suivante de fibre optique. Cette dernière possède elle-même une couche interne 44 en contact avec le premier support supplémentaire 14. La fibre optique se prolonge jusqu'à la couche externe 46 de la partie 42 de fibre optique placée sur le support cylindrique supplémentaire suivant 40. De manière générale, la bobine selon l'invention peut comprendre un nombre déterminé M de supports cylindriques supplémentaires 14, 40, etc. Le premier support supplémentaire 14 est placé à l'intérieur du support principal 12, et le support supplémentaire 40 de rang M + 1 est placé à l'intérieur du support supplémentaire 14 de rang M. La couche interne 30 ou 44 d'une partie de fibre optique 18 ou 20 de rang M est reliée à la couche externe 38 ou 46 de la partie 20 ou 42 de rang M + 1. Bien évidemment, la dernière partie 42 de fibre optique placée sur le dernier support supplémentaire 40 se termine par une liaison avec l'intérieur du missile. Chaque support supplémentaire 14 et 40 comporte de préférence un bourrelet 34 sur sa première extrémité 36 par laquelle la fibre optique 16 se déroule. Chaque bourrelet 34 est également échancré localement pour permettre des passages respectifs de la fibre 16 d'un étage à l'autre. En conséquence, l'enroulement de chaque étage est tel que la dernière spire 50 de la couche externe 38 ou 46 de la partie de fibre M + 1 se trouve près de l'extrémité de déroulement 36 du support précédent de rang M. Cette dernière spire 50 se trouve donc en correspondance avec la première spire 37 du support de rang précédent M - 1, 12 ou 14.

En référence à la figure 5, chaque support 12 ou 14 de rang M peut se prolonger au-delà de la première fibre 50 de la couche externe 38 ou 46 de la partie suivante 20 ou 42 de fibre optique de rang M + 1. Ceci permet de constituer un capot pour la partie 20 ou 42 de fibre optique de rang M + 1. De manière analogue au capot principal 22, et en particulier à sa partie d'extrémité rétrécie 56, le diamètre de chaque capot ainsi constitué 60 peut diminuer progressivement. Dans ce cas, la fibre optique 16 fait le tour de cette partie d'extrémité 60 lors de chaque passage d'un étage à l'autre.

L'application principale de la bobine selon l'invention se fait sur un missile.

Dans ce cas, cette bobine est montée à l'arrière de ce missile, de manière à pouvoir permettre le dévidement, ou le déroulement, de la fibre au cours du parcours du missile. Ce déroulement doit se faire par l'extrémité de déroulement 36 des supports 12, 14 et 40 de la fibre optique 16.

## Revendications

1. Bobine de fibre optique de grande longueur constituée d'un support cylindrique principal (12) autour duquel est enroulée une première partie (18) de la fibre optique (16), couche par couche, dont une couche interne (30, 44) enroulée directement sur le support cylindrique principal (12) jusqu'à une couche externe (32, 38, 46), la fibre optique (16) étant destinée à être déroulée par traction, à partir de la couche externe (32, 38, 46) jusqu'à la couche interne (30, 44), caractérisée en ce qu'elle est constituée d'un premier support cylindrique supplémentaire (14) concentrique et placé à l'intérieur du support cylindrique principal (12), une deuxième partie (20) de la fibre optique (16) étant enroulée autour de ce premier support supplémentaire (14), la couche interne (30) de la première partie (18) de la fibre optique (16) étant directement reliée à une couche externe (38) de la deuxième partie (20) de la fibre optique (16).

2. Bobine selon la revendication 1, caractérisé en ce que le support principal (12) et le support supplémentaire (14) comportent chacun un bourrelet (34) sur une première extrémité (36) dite de déroulement.

3. Bobine selon la revendication 1 ou 2, caractérisée en ce qu'elle comprend un nombre déterminé M de supports cylindriques supplémentaires (14, 40) concentriques successifs, placés à l'intérieur les uns des autres, le premier support supplémentaire (14) étant placé à l'intérieur du support principal (12), et sur lesquels sont enroulées un même nombre déterminé M de parties successives (20, 42) de la fibre optique (16), la couche interne (30 et 44) de la partie de rang M (18, 20) étant reliée directement à la couche externe (38 et 46) de la partie de rang M + 1, chaque support supplémentaire (14, 40) comportant un bourrelet (34) sur une première extrémité (36) dite de déroulement de chaque support supplémentaire (14, 40).

4. Bobine selon la revendication 3, caractérisée en ce que le bourrelet (34) est échancré localement pour permettre le passage direct de la fibre optique (16) de la couche interne (30, 44) de la partie de fibre de rang M (18, 20) vers la couche externe (38, 46) de la partie de rang M + 1 de la fibre optique (16), la dernière spire (50) de la couche externe (38, 46) de la partie de fibre de rang M + 1 se trouvant près de l'extrémité de déroulement (36) du support de rang M, en correspondance avec la première spire (37) du support de rang M (12, 14).

5. Bobine selon l'une quelconque des revendications précédentes, caractérisée en ce qu'elle comporte un capot (22) concentrique avec les supports (12, 14, 40) et de diamètre déterminé pour entourer la première partie (18) de la fibre optique (16) en laissant un espace (54) permettant le phénomène de ballonnement (58) de la fibre optique (16) lors de son déroulement.

6. Bobine selon la revendication 5, caractérisée en ce que le capot (22) se prolonge au-delà des extrémités de déroulement (36) pour se terminer par une partie d'extrémité (56) de diamètre inférieur au diamètre initial du capot (22).

7. Bobine selon l'une quelconque des revendications 3 à 6, caractérisée en ce que chaque support de rang M (12, 14) se prolonge au-delà de la première spire (50) de la couche externe (38, 46) de la partie de fibre optique de rang M + 1 (20, 42) pour constituer un capot pour ladite partie de fibre optique de rang M + 1 (14, 40), le diamètre du capot ainsi constitué (60) diminuant progressivement.

8. Missile comportant une bobine selon l'une quelconque des revendications précédentes, ladite bobine étant montée à l'arrière du missile, permettant une liaison bidirectionnelle à large bande passante entre celui-ci et l'installation au sol, et pouvant être dévidée au cours du parcours du missile par les extrémités de déroulement (36) des supports (12, 14, 40) de la fibre optique.

## Patentansprüche

1. Spule mit einer sehr langen optischen Glasfaser bestehend aus einem zylindrischen Haupthalter (12), um welchen ein erster Teil (18) der optischen Glasfaser (16) Lage pro Lage aufgewickelt ist, deren eine innere Lage (30, 44) direkt auf den zylindrischen Haupthalter (12), bis zu einer äußeren Lage (32, 38, 46), aufgewickelt ist, wobei die optische Glasfaser (16) dazu bestimmt ist, ausgehend von der äußeren Lage (32, 38, 46) bis zu der inneren Lage (30, 44), durch Zug abgewickelt zu werden, und dadurch gekennzeichnet ist, daß sie weiter aus einem zusätzlichen konzentrischen ersten zylindrischen Halter (14), im Innern des zylindrischen Haupthalters (12) angeordnet, besteht, wobei ein zweiter Teil (20) der optischen Glasfaser (16) um diesen ersten zusätzlichen Halter (14) aufgewickelt, und die innere Lage (30) des ersten Teils (18) der optischen Glasfaser (16) direkt mit einer äußeren Lage (38) des zweiten Teils (20) der optischen Glasfaser (16) verbunden ist.

2. Spule nach Anspruch 1, dadurch gekennzeichnet, daß der Haupthalter (12) und der zusätzliche Halter (14) an einem ersten Ende, genannt Abrollende, jeweils eine Wulst (38) umfaßt.

3. Spule nach Anspruch 1 oder 2, dadurch gekennzeichnet, daß sie eine bestimmte Anzahl M von konzentrischen, ineinander angeordneten und einander folgenden, zusätzlichen zylindrischen Haltern (14, 40) umfaßt, auf welchen eine gleiche bestimmte Anzahl M von einander folgenden Teilen (20, 42) der optischen Glasfaser (16) aufgewickelt ist, wobei der erste zusätzliche zylindrische Halter (14) im Innern des Haupthalters (12) angeordnet ist, wobei die innere Lage (30 und 44) des Teils der Rangfolge M (18, 20) direkt mit der äußeren Lage (38 und 46) des Teils der Rangfolge M + 1 verbunden ist, und jeder zusätzliche Halter (14, 40) einen Wulst (34) an einem ersten Ende (34), genannt Abrollende, jedes zusätzlichen Halters (14, 40) umfaßt.

4. Spule nach dem Anspruch 3, dadurch gekennzeichnet, daß der Wulst (34) örtlich ausgespart ist, um den direkten Durchgang der optischen Glasfaser (16) der inneren Lage (30, 44) der Faser des Teils der Rangfolge M (18, 20) zur äußeren Lage (38, 46) des Teils der Rangfolge M + 1 der optischen Glasfaser (16) zu erlauben, wobei sich. die letzte Windung (50) der äußeren Lage (38, 46) des Teils der Faser mit Rangfolge M + 1 in der Nähe des Abrollendes (36) des Halters der Rangfolge M befindet, in Übereinstimmung mit der ersten Windung (37) des Halters der Rangfolge M (12, 14).

5. Spule nach irgend einem der vorgehenden Ansprüche, dadurch gekennzeichnet, daß sie eine Haube (22), konzentrisch mit den Haltern (12, 14, 40), mit einem Durchmesser, bestimmt den ersten Teil (18) der optischen Glasfaser (16) unter Freilassung eines Zwischenraums (54), welcher das Ballonförmige Ausweichen der optischen Glasfaser (16) während des Abrollens erlaubt, zu umgeben.

6. Spule nach Anspruch 5, dadurch gekennzeichnet, daß die Haube (22) über die Abrollenden (36) hinaus verlängert ist, um in einem Ende (56) mit kleinerem, als dem ursprünglichen, Durchmesser der Haube zu enden.

7. Spule nach irgend einem der Ansprüche 3 bis 6, dadurch gekennzeichnet, daß jeder Halter der Rangfolge M (12, 14) über die erste Windung (50) der äußeren Lage (38), 46) des Teils der optischen Glasfaser mit Rangfolge M + 1 (20, 42) hinaus verlängert ist, um eine Haube für besagtes Teil der optischen Glasfaser mit Rangfolge M + 1 (14,40) zu bilden, wobei der Durchmesser der so gebildeten Haube (60) progressiv abnimmt.

8. Flugkörper, eine Spule nach irgend einem der vorgehenden Ansprüche umfassend, wobei besagte Spule im hinteren des Flugkörpers montiert ist, eine breitbandige Verbindung in beiden Richtungen zwischen demselben und der Bodeneinrichtung erlaubend, und während des Fluges durch die Abrollenden (36) der Halter (12, 14, 40) der optischen Glasfaser abgerollt werden kann.

## Claims

1. Coil for a long optical fibre constituted by a main cylindrical support (12) around which is wound a first part (18) of the optical fibre (16) in layer-by-layer form, an internal layer (30,44) being wound directly onto the main cylindrical support (12) up to an outer layer (32,38, 46), the optical fibre (16) being unwound by pulling, from an outer layer (32,38,46) to the inner layer (30,44), a first concentric, supplementary cylindrical support (14) placed within the main cylindrical support (12), a second part (20) of the optical fibre (16) being wound around said first supplementary support (14), the inner layer (30) of the first part (18) of the optical fibre (16) being directly connected to an outer layer (38) of the second part (20) of the optical fibre (16).

2. Coil according to claim 1, characterized in that the main support (12) and the supplementary support (14) have in each case a flange (34) on the first, so-called unwinding end (36).

3. Coil according to claims 1 or 2, characterized in that it comprises a predetermined number M of successive concentric, supplementary cylindrical supports (14,40) placed within one another, the first supplementary support (14) being placed within the main support (12) and onto which are wound a same predetermined number M of successive parts (20,42) of optical fibre (16), the inner layer (30,44) of the part of rank M (18,20) being directly connected to the outer layer (38,46) of the part of rank M + 1, each supplementary support (14,40) having a flange (34) on a first, so-called unwinding end (36) of each supplementary support (14,40).

4. Coil according to claim 3, characterized in that the flange (34) is locally notched to permit the direct passage of the optical fibre (16) of the inner layer (30,44) of the fibre part of rank M (18,20) to the outer layer (38,46) of the part of rank M + 1 of optical fibre (16), the last turn (50) of the outer layer (38,46) of the fibre part of rank M + 1 being located close to the unwinding end (36) of the support of rank M, corresponding to the first turn (37) of the support of rank M (12,14).

5. Coil according to any one of the preceding claims, characterized in that it has a cover (22) concentric to supports (12,14,40) and with a predetermined diameter, so as to surround the first part (18) of the optical fibre (16), whilst leaving a space (54) to allow the so-called ballooning phenomenon (58) of the optical fibre (16) during its unwinding.

6. Coil according to claim 5, characterized in that the cover (22) is extended beyond the unwinding ends (36) in order to terminate by an end port (56) with a diameter smaller than the initial diameter of cover (22).

7. Coil according to any one of the claims 3 to 6, characterized in that each support of rank M (12,14) is extended beyond the first turn (50) of the outer layer (38,46) of the optical fibre part of rank M + 1 (20,42), so as to constitute a cover for said optical fibre part of rank M + 1 (14,40), the diameter of the thus formed cover (60) decreasing in a progressive manner.

8. Missile having a coil according to any one of the preceding claims, said coil being mounted at the rear of the missile and permitting a wide passband bidirectional link between the latter and the ground installation and which can be unwound during the flight of the missile by the unwinding ends (36) of the optical fibre supports (12,14,40).
